# EUROPEAN PATENT APPLICATION

(11) **EP 4 769 665 A1**
(43) Date of publication of application: **01.07.2026**
(21) Application number: 25797835.3
(22) Date of filing: 23.04.2025
(51) Int. Cl.: H01M 10/6557, H01M 10/613, H01M 10/653

(54) **BATTERY CELL ASSEMBLY AND BATTERY PACK INCLUDING SAME**

(30) Priority: 29.04.2024 KR 20240056444; 31.05.2024 KR 20240071873
(71) Applicant: LG ENERGY SOLUTION, LTD., Seoul 07335 (KR)
(72) Inventor: JANG, Jun Ho, Daejeon 34122 (KR)
(74) Representative: Plasseraud IP
(86) International application number: PCT/KR2025/005459
(87) International publication number: WO 2025/230210

(57) **Abstract**

A battery pack includes a pack housing, a battery cell assembly, and a lid is provided. The pack housing includes a base plate that has cooling channels disposed within, and side walls. The battery cell assembly is disposed on the pack housing. The lid is coupled to the side walls and includes another cooling channel. The battery cells of the battery cell assembly includes cooling fins disposed between each of the plurality of battery cells. Each cooling fin includes a contact part overlapping a respective battery cell, a heat emission part connected to the contact part and facing the lid, and a protection part overlapping the contact part.

## Description

### CROSS REFERENCE TO RELATED APPLICATIONS

The present application is a national phase entry under 35 U.S.C. § 371 of International Application No. PCT/KR2025/005459 file on April 23, 2025, which claims priority from Korean Patent Application No. 10-2024-0056444, filed on April 29, 2024, and Korean Patent Application No. 10-2024-0071873, filed on May 31, 2024, the disclosures of which are incorporated by reference in their entirety.

### [Technical Field]

The present disclosure relates to a battery cell assembly and a battery pack including the same.

### [Background]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

In a current trend toward emphasizing secondary batteries for mobility, the development of secondary battery technology is mainly aimed to reduce production costs and improve safety. A secondary battery account for a largest portion of manufacturing costs of a BEV. Therefore, a most important factor in increasing the share of BEVs compared to internal combustion engine vehicles is production costs of secondary batteries. Production costs can be reduced by reducing raw materials, reducing the number of steps in a production process, and reducing a tact time. The safety of a secondary battery is directly related to the lives of occupants of mobility and thus is very important. A key task to enhance the safety of a secondary battery is to provide a cooling solution for a battery pack.

### [Summary]

### [Technical Problem]

The present disclosure is directed to providing a battery cell assembly with improved cooling efficiency and a battery pack including the same.

### [Technical Solution]

Aspects of the present disclosure provide a battery pack. The battery pack includes a pack housing including a base plate that includes first cooling channels, a battery cell assembly on the pack housing, and a lid coupled to side walls and including second cooling channels, in which the battery cell assembly includes a plurality of battery cells arranged in a first direction parallel to a mounting surface of the base plate and a plurality of cooling fins between the plurality of battery cells, and each of the plurality of cooling fins includes a contact part overlapping the plurality of battery cells in the first direction, a heat emission part connected to the contact part and facing the lid, and a protection part overlapping the contact part in the first direction.

The contact part of each of the plurality of cooling fins may include a hollow.

The battery cell assembly may further include a plurality of pads between the plurality of battery cells.

Each of the plurality of pads may be in the hollow of a corresponding one of the plurality of cooling fins.

A thickness of each of the plurality of pads may be the same as a thickness of the contact part of each of the plurality of cooling fins.

The protection part may cover the hollow.

Each of the plurality of cooling fins may further include a burr surrounding the hollow of the contact part.

The protection part may face the burr.

The protection part may be spaced apart from the heat emission part with the contact part therebetween.

The protection part may overlap the heat emission part in a third direction perpendicular to the mounting surface of the base plate.

The plurality of battery cells and the plurality of cooling fins may alternate in the first direction.

The contact part of each of the plurality of cooling fins may be in contact with one of the plurality of battery cells, and the protection part of each of the plurality of cooling fins may be in contact with another of the plurality of battery cells.

A first surface of each of the plurality of battery cells may be in contact with the contact part of a corresponding one of the plurality of cooling fins, and a second surface of each of the plurality of battery cells may be in contact with the protection part of the corresponding one of the plurality of cooling fins, the second surface being opposite to the first surface.

### [Advantageous Effects]

According to aspects of the present disclosure, heat emitted from a plurality of battery cells may be transmitted to cooling channels of a lid through a plurality of cooling fins, thereby improving the cooling efficiency of a battery pack.

Effects achievable from aspects of the present disclosure are not limited to the above-described effects, and other effects that are not described herein will be clearly derived and understood by those of ordinary skill in the art to which the aspects of the present disclosure pertain from the following description. That is, unintended effects achieved when the aspects of the present disclosure are implemented are derivable by those of ordinary skill in the art from the aspects of the present disclosure.

### [Brief Description of the Drawings]

FIG. 1 is a perspective view for describing a battery pack according to aspects.
FIG. 2 is an exploded perspective view of a battery pack according to aspects.
FIG. 3 is a perspective view of a battery cell assembly according to aspects.
FIG. 4 is a cross-sectional view taken along line 3I-3I' of FIG. 3.
FIG. 5 is a cross-sectional view of a cooling fin and a pad according to aspects.
FIG. 6 is an elevation view of a cooling fin and a pad according to aspects.
FIG. 7 is an elevation view of a cooling fin according to other aspects.

### [Detailed Description]

Hereinafter, aspects of the present disclosure will be described in detail with reference to the accompanying drawings. Before describing aspects of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, aspects set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

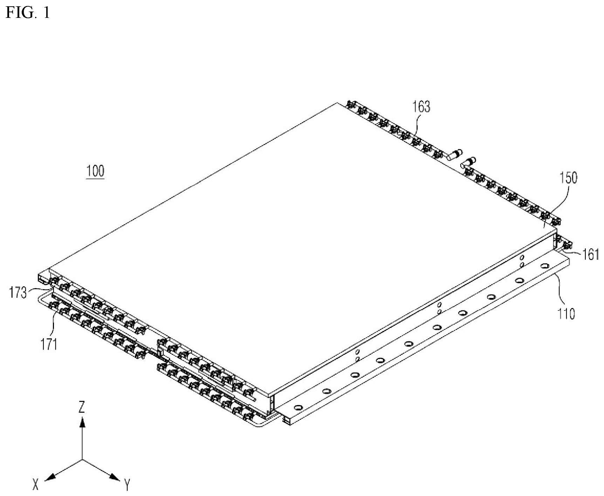

Because aspects of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.FIG. 1 is a perspective view for describing a battery pack 100 according to aspects.

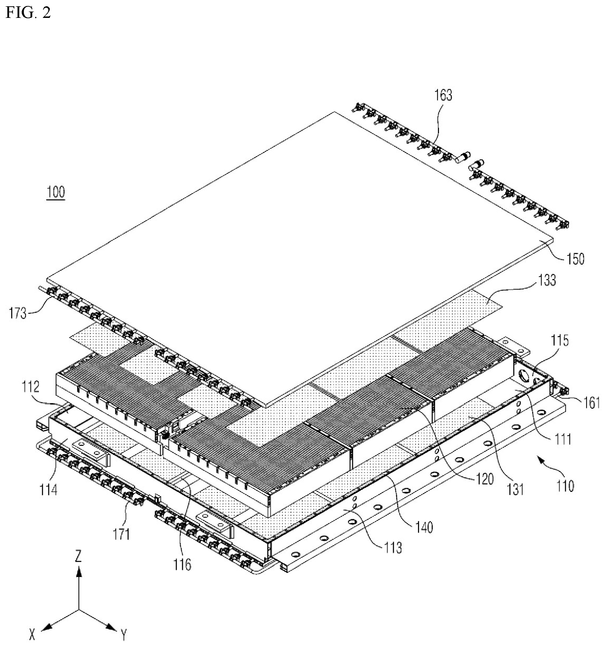

FIG. 2 is an exploded perspective view of the battery pack 100 according to aspects.

Referring to FIGS. 1 and 2, the battery pack 100 may include a housing 110, a plurality of battery cell assemblies 120, first thermal interface material (TIM) layers 131, second TIM layers 133, a gasket 140, a lid 150, a lower injection pipe 161, an upper injection pipe 163, a lower recovery pipe 171, and an upper recovery pipe 173. The battery pack 100 is a final form of a battery system to be mounted in a mobility or the like.

The housing 110 may provide a space for arranging the plurality of battery cell assemblies 120 therein. The housing 110 may include a base plate 111, side walls 112, 113, 114, and 115, and a center beam 116.

Two directions substantially parallel to a mounting surface of the base plate 111 are defined as an X-axis direction and a Y-axis direction, and a direction substantially perpendicular to the mounting surface of the base plate 111 is defined as a Z-axis direction. The X-axis direction, the Y-axis direction, and the Z-axis direction may be substantially perpendicular to one another. Unless otherwise mentioned, the definition of the directions will apply to the following drawings.

Each of the base plate 111 and the side walls 112 and 113 may be provided by an extrusion process. An extrusion direction of each of the base plate 111 and the side walls 112 and 113 may be the X-axis direction. That is, a YZ cross-section of each of the base plate 111 and the side walls 112 and 113 may be constant according to a position in the X-axis direction except for deformation due to additional tooling. Here, the YZ cross-section may be substantially parallel to the Y-axis direction and the Z-axis direction and be substantially perpendicular to the X-axis direction. The base plate 111 and the side walls 112 and 113 may be arranged in the Y-axis direction. The side walls 114 and 115 may also be provided by the extrusion process.

According to aspects, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate on a midpoint between the plurality of unit plates coupled together by friction stir welding. Accordingly, the center beam 116 may be formed together with the center plate by the extrusion process and may be an element integrally formed with the center plate.

The base plate 111 may include a plurality of first cooling channels. The plurality of first cooling channels may provide a passage for moving, for example, a refrigerant such as water. The plurality of first cooling channels may be formed by the extrusion process. The plurality of first cooling channels may extend in the X-axis direction. The plurality of first cooling channels may be spaced apart from each other in the Y-axis direction.

The first cooling channels of the base plate 111 may be connected to the lower injection pipe 161 and the lower recovery pipe 171. A cooling fluid introduced through the lower injection pipe 161 may flow through the first cooling channels and be recovered by the lower recovery pipe 171.

The plurality of battery cell assemblies 120 may be on the base plate 111 of the housing 110. The base plate 111 may support the plurality of battery cell assemblies 120. The side walls 112, 113, 114, and 115 may horizontally surround the plurality of battery cell assemblies 120.

The first TIM layers 131 may be interposed between the plurality of battery cell assemblies 120 and the base plate 111. The first TIM layers 131 may include a resin composition. The first TIM layers 131 may be provided by a process of applying a thermal resin. The first TIM layers 131 may prevent an air layer from being formed between the base plate 111 and battery cells 121, thereby promoting the cooling of the plurality of battery cell assemblies 120. The first TIM layers 131 may be in contact with the battery cells 121 of the plurality of battery cell assemblies 120 and the base plate 111.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicon resin, a polyol resin, an epoxy resin, or an acrylic resin.

The center beam 116 may extend in the X-axis direction. The center beam 116 may be on a central area of the base plate. The center beam 116 may isolate the battery cell assemblies 120 from each other. The center beam 116 may be interposed between the battery cell assemblies 120.

In the present example, the plurality of battery cell assemblies 120 are arranged in two rows and three columns. Accordingly, it may be understood that the plurality of battery cell assemblies 120 are arranged in a 3x2 array. A battery pack including the plurality of battery cell assemblies 120 arranged in an MxN array would be easily derived by those of ordinary skill in the art, based on the above description. Here, M and N are each an integer of 2 or more.

The lid 150 may be coupled to the side walls 112, 113, 114 and 115. The lid 150 may be fixed to the side walls 112, 113, 114, and 115 by a mechanical means such as a bolt. The lid 50 may cover elements, such as the battery cell assemblies 120 and electronic components, inside the battery pack 100. The gasket 140 may be interposed between the lid 150 and the side walls 112, 113, 114, and 115. The gasket 140 may provide a liquid seal to the battery pack 100.

According to aspects, the lid 150 may be provided by the extrusion process. The lid 150 may include a plurality of second cooling channels. The plurality of second cooling channels may provide a passage for moving, for example, a refrigerant such as water. The plurality of second cooling channels may be formed by the extrusion process. The plurality of second cooling channels may extend in the X-axis direction. The plurality of second cooling channels may be spaced apart from each other in the Y-axis direction.

The second cooling channels of the lid 150 may be connected to the upper injection pipe 163 and the upper recovery pipe 173. A cooling fluid introduced through the upper injection pipe 163 may flow through the second cooling channels and be recovered by the upper recovery pipe 173.

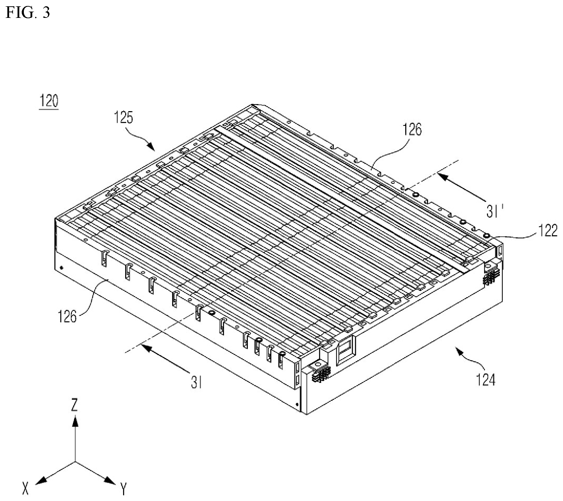

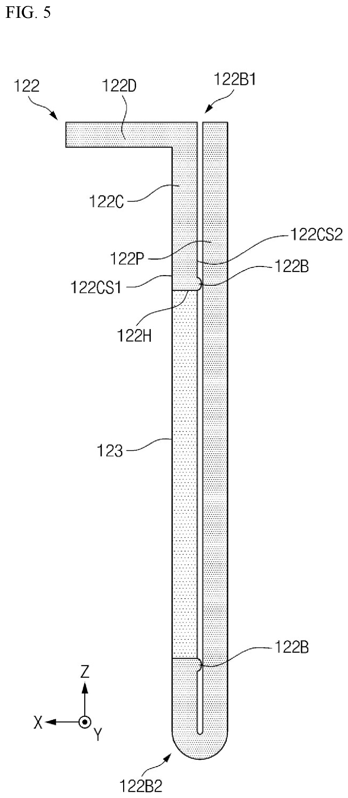

The second TIM layers 133 may be interposed between the lid 150 and the battery cell assemblies 120. The second TIM layers 133 may be heat transfer pads. Each of the second TIM layers 133 may be spaced apart from the plurality of battery cells 121. Each of the second TIM layers 133 may be in contact with the plurality of cooling fins 122 (see FIG. 3). Each of the second TIM layers 133 may be in contact with heat emission parts 122D (see FIG. 3) of the plurality of cooling fins 122 (see FIG. 3). Each of the second TIM layers 133 may be in contact with the lid 150. The heat emission part 122D (refer to FIG. 5) of each of the plurality of cooling fins 122 (see FIG. 3) may be spaced apart from the lid 150 with the second TIM layers 133 therebetween.

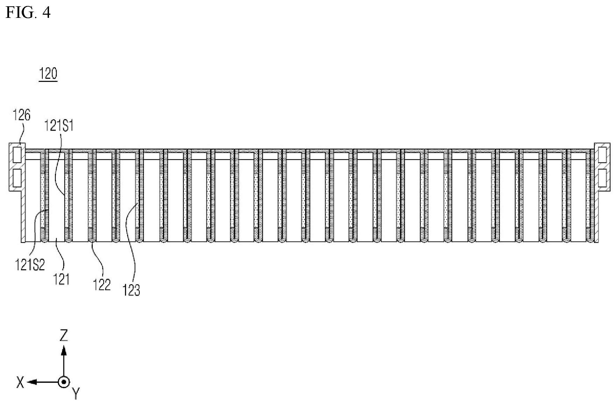

According to aspects, the plurality of cooling fins 122 (see FIG. 4) are provided to be in contact with the plurality of battery cells 121 (see FIG. 4) and cover terrace parts of the plurality of battery cells 121. Accordingly, an air layer may be prevented from being formed between the plurality of battery cells 121 and the second TIM layers 133 due to the terrace parts of the plurality of battery cells 121 (see FIG. 4), and the cooling efficiency of the battery pack 100 may be improved. Here, the terrace parts are sealing parts of a case of the plurality of battery cells 121.

According to aspects, because a lower part of each of the plurality of battery cells 121 (i.e., a part of each of the plurality of battery cells 121 adjacent to the base plate 111) is in direct contact with the first TIM layers 131, an air layer may be prevented from being formed between the base plate 111 and the base plate 111, and the cooling efficiency of the battery pack 100 may be improved.

The battery pack 100 may further include exhaust devices coupled to the side wall 115. When a thermal runaway event occurs in the battery pack 100, the exhaust devices may discharge a high-temperature gas and flames from the inside of the battery pack 100 to delay thermal propagation.

Here, a thermal runaway state of the plurality of battery cell assemblies 120 is a state in which a change of temperature of the plurality of battery cell assemblies 120 accelerates the change of temperature, i.e., uncontrollable positive feedback. A temperature of the plurality of battery cell assemblies 120 that are in the thermal runaway state sharply increases, and a large amount of a high-pressure gas and combustion debris are discharged.

The battery pack 100 may further include electronic components. The electronic components may include an electronic device required to drive the battery pack. The electronic components may be on an electronic component mounting region EMR.

The electronic components may include, for example, a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

The battery pack 100 may further include a plurality of exhaust devices. The plurality of exhaust devices may be installed on one of the lid 150 and the side walls 112, 113, 114, and 115. The plurality of exhaust devices may provide a path for discharging a high-temperature gas from the inside of the battery pack 100 to the outside when the thermal runaway event occurs in some of the plurality of battery cell assemblies 120. Accordingly, thermal propagation may be delayed, and the stability of the battery pack 100 may be improved.

FIG. 3 is a perspective view of a battery cell assembly 120 according to aspects.

FIG. 4 is a cross-sectional view taken along line 3I-3I' of FIG. 3.

FIG. 5 is a cross-sectional view of a cooling fin 122 and a pad 123 according to aspects.

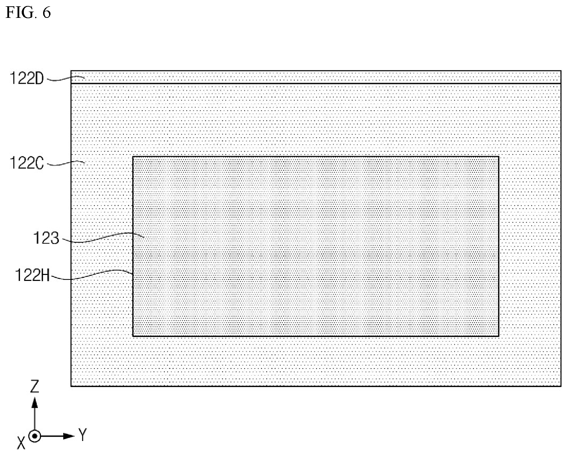

FIG. 6 is a front view of the cooling fin 122 and the pad 123 according to aspects.

Referring to FIGS. 3 to 6, each of a plurality of battery cell assemblies 120 may include a plurality of battery cells 121, a plurality of cooling fins 122, a plurality of pads 123, a first circuit assembly 124, and a second circuit assembly 125.

Each of the plurality of battery cells 121 may be a lithium ion battery. Each of the plurality of battery cells 121 includes an electrode assembly, an electrolyte, and a case. Each of the plurality of battery cells 121 may be a cylindrical battery cell, a prismatic battery cell, or a pouch type battery cell. A case of the cylindrical battery cell may be a cylindrical metal can. An electrode assembly of the cylindrical battery cell is embedded in a cylindrical metal can. A case of the prismatic batteries cell may be a prismatic metal case. An electrode assembly of the prismatic battery cell is embedded in a prismatic metal can. A case of the pouch type battery cell may be a pouch sheet. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween.

The plurality of battery cells 121 may form a plurality of banks. Each of the plurality of banks may include one or more battery cells 121. The one or more battery cells 121 of each of the plurality of banks may be connected with each other in parallel. The plurality of banks may be connected to each other in series. The number of banks connected in series and the number of battery cells 121 included in the plurality of banks may be determined according to a voltage and a current to be output from each of the battery cell assemblies 120.

The plurality of cooling fins 122 may be interposed between the plurality of battery cells 121. The plurality of cooling fins 122 and the plurality of battery cells 121 may alternate in the X-axis direction. One of the plurality of cooling fins 122 may be interposed between adjacent battery cells 121. One of the plurality of battery cells 121 may be interposed between adjacent cooling fins 122.

Each of the plurality of cooling fins 122 may have high thermal conductivity. Each of the plurality of cooling fins 122 may include, for example, a metal material such as aluminum and stainless steel.

The plurality of cooling fins 122 may have a Γ-shape. Each of the plurality of cooling fins 122 may include a contact part 122C perpendicular to the base plate 111, a heat emission part 122D connected to the contact part 122C and facing the lid 150, and a protection part 122P overlapping the contact part 122C in the X-axis direction. Each of the plurality of cooling fins 122 may include a first bending part 122B1 connecting the contact part 122C and the heat emission part 122D and a second bending part 122B2 connecting the contact part 122C and the protection part 122P.

The contact part 122C of each of the plurality of cooling fins 122 may be substantially perpendicular to the X-axis direction. The contact part 122C of each of the plurality of cooling fins 122 may be inclined in the X-axis direction. The heat emission part 122D of each of the plurality of cooling fins 122 may be substantially perpendicular to the Z-axis direction. The heat emission part 122D of each of the plurality of cooling fins 122 may be inclined in the Z-axis direction. The protection part 122C of each of the plurality of cooling fins 122 may be substantially perpendicular to the X-axis direction. The protection part 122C of each of the plurality of cooling fins 122 may be inclined in the X-axis direction.

According to aspects, a direction in which the first bending part 122B1 of each of the plurality of cooling fins 122 bends and a direction in which the second bending part 122B2 of each of the plurality of cooling fins 122 bends may be the same. For example, the first bending part 122B1 of each of the plurality of cooling fins 122 may bend counterclockwise, and the second bending part 122B2 of each of the plurality of cooling fins 122 may bend counterclockwise. According to aspects, the heat emission part 122D may be spaced apart from the protection part 122P with the contact part 122C interposed therebetween. The heat emission part 122D may not overlap the protection part 122P in the Z-axis direction.

The contact part 122C of each of the plurality of cooling fins 122 may be interposed between the plurality of battery cells 121. The contact part 122C of each of the plurality of cooling fins 122 may overlap the plurality of battery cells 121 in the X-axis direction. The contact part 122C of each of the plurality of cooling fins 122 may be in contact with a first surface 121S1 of a corresponding one of the plurality of battery cells 121.

The contact part 122C of each of the plurality of cooling fins 122 may include a hollow 122H. The hollow 122H of each of the plurality of cooling fins 122 may have an approximately quadrangular shape. The contact part 122C of each of the plurality of cooling fins 122 may have an approximately quadrangular shape but is not limited thereto. The contact part 122C of each of the plurality of cooling fins 122 and the hollow 122H of each of the plurality of cooling fins 122 may each have a cross shape, a star shape or a polygonal shape. The hollow 122H of each of the plurality of cooling fins 122 may include round corners. A position, shape, and size of the hollow 122H may be determined based on conditions related to absorbing the swelling of the plurality of battery cells 121 and the cooling efficiency of the plurality of battery cells 121.

Generally, when a battery cell is operated, a temperature of an edge part of the battery cell may be higher than a temperature of a central part of the battery cell. Accordingly, the battery cell assembly 120 may have high cooling performance even though the contact parts 122C of the plurality of cooling fins 122 are not in contact with central parts of the first surfaces 121S1 and second surfaces 121S2 and are in contact with only edge parts of the first surfaces 121S1 and the second surfaces 121S2 due to the hollows 122H.

Each of the plurality of cooling fins 122 may include a burr 122B on a second surface 122CS2. The burr 122B may be formed along an inner edge of the contact part 122C defining the hollow 122H. The burr 122B may surround the hollow 122H.

According to aspects, the hollow 122H may be formed by mechanical processing such as punching, and the burr 122B may be a residue generated due to processing for formation of the hollow 122H. For example, a tool (e.g., a punch) for forming the hollow 122H may be moved from the first surface 122CS1 of the contact part 122C toward the second surface 122CS2 and thus the burr 122B may be formed on the second surface 122CS2.

According to aspects, the protection part 122P may overlap the hollow 122H of the contact part 122C in the X-axis direction. According to aspects, the protection part 122P may overlap the burr 122B of the contact part 122C in the X-axis direction. According to aspects, the protection part 122P may cover the hollow 122H of the contact part 122C. According to aspects, the protection part 122P may cover the burr 122B to cause the burr 122B to be spaced apart from each of the plurality of battery cells 121, thereby preventing the plurality of battery cells 121 from being damaged due to the burr 122B of each of the plurality of cooling fins 122.

The protection part 122P of each of the plurality of cooling fins 122 may be in contact with one of the first and second surfaces 121S1 and 121S2 of the corresponding one of the plurality of battery cells 121. The second surface 121S2 is opposite to the first surface 121S1.

According to aspects, the first surface 121S1 and the second surface 121S2 of each of the plurality of battery cells 121 may be cooled by the contact part 122C or the protection part 122P of a corresponding one of the plurality of cooling fins 122.

For example, when the first surface 121S1 of one of the plurality of battery cells 121 is cooled by the contact part 122C of one of the plurality of cooling fins 122, the second surface 121S2 of the one of the plurality of battery cells 121 may be cooled by the protection part 122P of another of the plurality of cooling fins 122.

As another example, when the second surface 121S2 of one of the plurality of battery cells 121 is cooled by the contact part 122C of one of the plurality of cooling fins 122, the first surface 121S1 of the one of the plurality of battery cells 121 may be cooled by the protection part 122P of another of the plurality of cooling fins 122.

The plurality of pads 123 may be interposed between the plurality of battery cells 121. The plurality of pads 123 and the plurality of battery cells 121 may alternate in the X-axis direction. One of the pads 123 may be interposed between adjacent battery cells 121. One of the plurality of battery cells 121 may be interposed between adjacent pads 123.

The plurality of pads 123 may absorb a change in width of the plurality of battery cells 121 in the X-axis direction due to the swelling of the plurality of battery cells 121. According to aspects, each of the pads 123 may include an elastic material. According to aspects, each of the pads 123 may include polyurethane (PU). According to aspects, each of the pads 123 may include a fire-resistant material.

The plurality of pads 123 may be in the hollow 122H of a corresponding one of the plurality of cooling fins 122. Each of the plurality of pads 123 may be surrounded by a portion of a corresponding one of the plurality of cooling fins 122, which define the hollows 122H, on a YZ plane. Here, the YZ plane may be substantially parallel to the Y-axis direction and the Z-axis direction and be substantially perpendicular to the X-axis direction.

A thickness of each of the plurality of pads 123 (e.g., a thickness thereof in the X-axis direction) may be substantially the same as a thickness of the contact part 122C of each of the plurality of cooling fins (e.g., a thickness thereof in the X-axis direction). The thickness of each of the plurality of pads 123 (e.g., the thickness thereof in the X-axis direction) may be different from the thickness of the contact part 122C of each of the plurality of cooling fins (e.g., the thickness thereof in the X-axis direction).

The plurality of pads 123 may have an approximately quadrangular shape. According to aspects, a length of each of the plurality of pads 123 in the Z-axis direction may be substantially the same as a width of the hollow 122H in the Z-axis direction. According to aspects, a length of each of the plurality of pads 123 in the Y-axis direction may be substantially the same as a width of the hollow 122H in the Y-axis direction.

According to other aspects, each of the plurality of pads 123 may have a shape different from that of the hollow 122H. For example, each of the plurality of pads 123 may be smaller than the hollow 122H. The length of each of the plurality of pads 123 in the Z-axis direction may be less than the width of the hollow 122H in the Z-axis direction. The length of each of the plurality of pads 123 in the Y-axis direction may be less than the width of the hollow 122H in the Y-axis direction.

The plurality of cooling fins 122 and the plurality of pads 123 may be coupled to the plurality of battery cells 121. The plurality of cooling fins 122 and the plurality of pads 123 may be fixed to the plurality of battery cells 121 via, for example, an adhesive. Each of the plurality of pads 123 may be fixed to the protection part 122P of a corresponding one of the plurality of cooling fins 122.

Each of the plurality of cooling fins 122 may be coupled to a corresponding one of the plurality of battery cells 121. According to aspects, the plurality of battery cells 121 and the plurality of cooling fins 122 may correspond to each other in a one-to-one fashion.

The first integrated circuit assembly 124 and the second integrated circuit assembly 125 may be spaced apart from each other in the Y-axis direction with the plurality of battery cells 121 therebetween. The first integrated circuit assembly 124 may include an insulating frame, an integrated circuit, bus bars, and an insulating cover. The second integrated circuit assembly 125 may include an insulating frame, an integrated circuit, and an insulating cover. The second integrated circuit assembly 125 is substantially the same as the first integrated circuit assembly 124, except that the second integrated circuit assembly 125 does not include bus bars.

The insulating frame may include an insulating material such as plastic. The insulating frame may cover front sides of the plurality of battery cells 121. The insulating frame may support the integrated circuit, the bus bars and sensing plates.

The bus bars may be short-circuited to positive electrode leads of one or more battery cells 121 of a first bank and negative electrode leads of one or more battery cells 121 of a last bank. The bus bars may be welded to the positive electrode leads of the one or more battery cells 121 of the first bank and the negative electrode leads of the one or more battery cells 121 of the last bank. Resulting voltages of the plurality of battery cells 121 may be output through the bus bars. The bus bars may be fixed to the insulating frame.

The integrated circuit may be mounted on the insulating frame. The positive electrode leads and the negative electrode leads that are welded together may form nodes inside the battery cell assembly 120. The integrated circuit may be configured to measure voltages of the nodes.

The insulating cover may include an insulating material such as plastic. The insulating cover may be interference-fitted into the insulating frame. The insulating cover may cover the integrated circuit and thus electrical elements of the first integrated circuit assembly 124 may be protected.

Each of the plurality of battery cell assemblies 120 may further include side beams 126. The side beams 126 may be spaced apart from each other with the plurality of battery cells 121 therebetween. The side beams 126 may cover the plurality of battery cells 121. The side beams 126 may horizontally support the plurality of battery cells 121. The side beams 126 may be fixed to the plurality of battery cells 121 via an adhesive material or the like.

According to aspects, the side beams 126 may have the same shape. According to aspects, the side beams 126 may be symmetrically arranged. The pack housing 110 may further include supporting beams extending in the Y-axis direction. The side beams 126 may be coupled to a corresponding one of the supporting beams. The side beams 126 may be fastened to the corresponding one of the supporting beams through a mechanical method such as bolting.

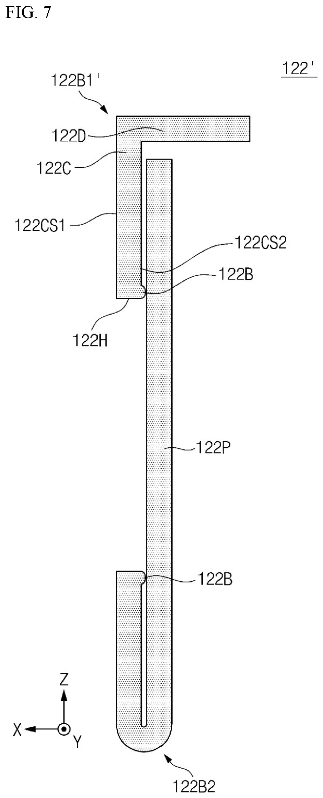

FIG. 7 illustrates a cooling fin 122' according to other aspects.

Referring to FIG. 7, the cooling fin 122' may include a contact part 122C, and a heat emission part 122D and a protection part 122P that are connected to the contact part 122C. The cooling fin 122' may further include a first bending part 122B1' connecting the contact part 122C and the heat emission part 122D and a second bending part 122B2 connecting the contact part 122C and the protection part 122P. The cooling fin 122' may further include a burr 122B on a second surface 122CS.

The cooling fin 122' may replace each of the plurality of cooling fins 122 of FIG. 4. The cooling fin 122' may be substantially the same as the plurality of cooling fins 122 of FIG. 5, except that the first bending part 122B1' and the second bending part 122B bend in opposite directions. For example, the second bending part 122B2 may bend in a counterclockwise direction and the first bending part 122B1' may bend in a clockwise direction. According to aspects, the heat emission part 122D may overlap the protection part 122P in the Z-axis direction.

The present disclosure has been described above in more detail with reference to the drawings, the aspects, etc. However, the configurations illustrated in the drawings or aspects described in the present specification are only examples of the present disclosure and do not reflect all the technical ideas of the present disclosure and thus it should be understood that various equivalents and modifications that replace the configurations would have been made at the filing date of the present application.

## Claims

1. A battery pack comprising:
a pack housing including a base plate and side walls, wherein the base plate includes first cooling channels;
a battery cell assembly disposed on the pack housing; and
a lid coupled to the side walls and including second cooling channels,
wherein the battery cell assembly includes a plurality of battery cells arranged in a first direction parallel to a mounting surface of the base plate and a plurality of cooling fins, each cooling fin of the plurality of cooling fins being disposed between respective battery cells of the plurality of battery cells, and
wherein each cooling fin of the plurality of cooling fins includes a contact part overlapping a respective battery cell of the plurality of battery cells in the first direction, a heat emission part extending from the contact part and facing the lid, and a protection part overlapping the contact part in the first direction.

2. The battery pack of claim 1, wherein the contact part of each cooling fin of the plurality of cooling fins includes a hollow portion.

3. The battery pack of claim 2, wherein the battery cell assembly further includes a plurality of pads, each pad of the plurality of pads being disposed between respective pairs of battery cells of the plurality of battery cells.

4. The battery pack of claim 3, wherein each pad of the plurality of pads is disposed in the hollow portion of a corresponding cooling fin of the plurality of cooling fins.

5. The battery pack of claim 3, wherein a thickness of each pad of the plurality of pads is the same as a thickness as the contact part of each cooling fin of the plurality of cooling fins.

6. The battery pack of claim 2, wherein the protection part covers the hollow portion.

7. The battery pack of claim 2, wherein each cooling fin of the plurality of cooling fins further includes a burr surrounding the hollow portion of the contact part.

8. The battery pack of claim 7, wherein the protection part covers the burr.

9. The battery pack of claim 2, wherein the protection part is spaced apart from the heat emission part with the contact part disposed therebetween.

10. The battery pack of claim 2, wherein the protection part overlaps the heat emission part in a third direction perpendicular to the mounting surface of the base plate.

11. The battery pack of claim 1, wherein each battery cell the plurality of battery cells and each cooling fin of the plurality of cooling fins alternate in the first direction.

12. The battery pack of claim 1, wherein the contact part of each cooling fin of the plurality of cooling fins is in contact with a respective battery cell of the plurality of battery cells, and the protection part of each cooling fin of the plurality of cooling fins is in contact with another battery cell of the plurality of battery cells.

13. The battery pack of claim 1, wherein a first surface of each battery cell of the plurality of battery cells is in contact with the contact part of a corresponding cooling fin of the plurality of cooling fins, and
a second surface of each battery cell of the plurality of battery cells is in contact with the protection part of the corresponding cooling fin of the plurality of cooling fins, the second surface being opposite to the first surface.
